**Europäisches Patentamt**

(19) **European Patent Office**

**Office européen des brevets**

(11) Numéro de publication: **0 015 850**
**B1**

(12) **FASCICULE DE BREVET EUROPEEN**

(45) Date de publication du fascicule du brevet:
01.12.82

(51) Int. Cl.³: **B 65 G 47/90**

(21) Numéro de dépôt: 80400314.3

(22) Date de dépôt: 07.03.80

(54) Dispositif de transfert de petites pièces.

(30) Priorité: 08.03.79 FR 7905996

(43) Date de publication de la demande:
17.09.80 Bulletin 80/19

(45) Mention de la délivrance du brevet:
01.12.82 Bulletin 82/48

(84) Etats contractants désignés:
AT BE CH DE GB IT LU NL SE

(56) Documents cités:
BE-A-655 937
CH-A-359 875
FR-A-2 360 379
US-A-3 513 989

(73) Titulaire: **S.A.M.E.C., Route de Billancelles,
F-28190 Courville sur Eure (FR)**

(72) Inventeur: **Raison, Claude, 1 Cité Phélibon,
F-28190 Courville S/Eure (FR)**
Inventeur: **Fiand, Guy, 16 rue Jean Moulin, F-28110 Luce
(FR)**

(74) Mandataire: **Bouget, Lucien et al,
CREUSOT-LOIRE 15 rue Pasquier, F-75383 Paris
Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

### Dispositif de transfert de petites pièces

L'invention concerne un dispositif de transfert de petites pièces comportant un bâti fixe, un moyen de préhension fixé sur un support et des moyens de déplacement du moyen de préhension et de son support par rapport au bâti fixe.

Pour l'approvisionnement en petites pièces de faible épaisseur d'une machine, par exemple une machine à sertir des rivets ou une machine à souder des plaquettes métalliques de petite dimension pour la fabrication de contacts électriques, il est nécessaire d'amener depuis un poste d'approvisionnement jusqu'au poste de travail de la machine, une à une, les plaquettes métalliques.

Pour amener ces petites pièces au poste de travail, on utilisait jusqu'ici des unités de transfert comportant un dispositif de prise, tel qu'un dispositif à ventouses, magnétique ou à pinces monté sur un support.

Le mouvement de translation du dispositif de prise et de son support se fait généralement dans un plan vertical où la trajectoire d'un point quelconque du dispositif de prise et de son support a généralement la force d'un U renversé. Les mouvements sont obtenus à l'aide de vérins se déplaçant selon deux directions perpendiculaires.

Un des inconvénients d'un dispositif de ce type est que, lorsque l'on recherche de grandes cadences de fonctionnement, la rapidité et le changement brusque de direction des mouvements font que l'on observe des à-coups dans le fonctionnement du bras. Par exemple, en fin de mouvement d'avance horizontale du bras, la pièce retenue par le dispositif de prise peut être amenée à se déplacer ou à tomber car, lors de l'arrêt brutal de l'avance, l'effort d'inertie est perpendiculaire à l'effort de prise.

Jusqu'ici, la solution pour éviter ces inconvénients était de diminuer la vitesse et de réguler les vérins, ce qui conduisait à diminuer la cadence d'utilisation du dispositif.

On connaît aussi (brevet US-A N° 3513989) un dispositif de transfert de pièces utilisant un système d'engrenages et de bielle qui procure un mouvement de transfert qui suit une trajectoire en arc de cercle. Ce dispositif est peu avantageux car les engrenages donnent des vibrations néfastes et d'autre part il est impossible de régler la longueur de cet arc de cercle, ce qui limite beaucoup les applications de cette machine.

On connaît d'autre part (brevet CH-A N° 359875) des tables à mouvements croisés dans des directions perpendiculaires permettant d'obtenir un mouvement quelconque d'une pièce en cours d'usinage, dans un plan horizontal.

La mise en mouvement d'un tel ensemble peut être assurée par une manivelle solidaire d'un axe lui-même relié à une bielle articulée sur l'élément mobile supérieur de l'ensemble à mouvements croisés portant la pièce à usiner. On peut alors faire effectuer à la pièce à usiner des mouvements suivant une trajectoire parfaitement circulaire dans un plan horizontal.

Un manipulateur automatique de pièces utilisant des éléments à mouvements croisés a également été décrit dans le BE-A N° 655937. Ce manipulateur comporte un bâti fixe, un moyen de préhension fixé sur un coulisseau et des moyens de déplacement du moyen de préhension et de son support par rapport au bâti fixe entre une position de prise et une position de dépose des pièces avec arrêt dans ces positions et inversion du déplacement. Le coulisseau, support du moyen de préhension, est monté mobile suivant une première direction d'un plan vertical sur un second coulisseau lui-même monté mobile suivant une seconde direction du même plan vertical perpendiculaire à la première direction, sur une partie verticale du bâti fixe. Des moyens moteurs portés par le bâti fixe comportant un arbre de sortie rotatif sont prévus pour donner un mouvement alternatif aux coulisseaux et au dispositif de préhension. Cependant, les moyens d'entraînement de ce manipulateur présentent une structure et une cinématique complexes et, en conséquence, le manipulateur n'est pas utilisable pour un transfert rapide de petites pièces d'un endroit à un autre.

L'invention concerne plus spécialement un dispositif de transfert de petites pièces comportant un bâti fixe, un moyen de préhension fixé sur un support et des moyens de déplacement du moyen de préhension et de son support par rapport au bâti fixe entre une position de prise et une position de dépose des pièces avec arrêt dans ces positions et inversion du déplacement, le dispositif utilisant un ensemble d'éléments à mouvement croisés dans des directions perpendiculaires connu en soi comportant un support, un bâti et un élément intermédiaire, le moyen de préhension étant porté par le support qui est monté mobile par rapport à l'élément intermédiaire selon une première direction d'un plan vertical et l'élément intermédiaire étant monté mobile par rapport au bâti selon une deuxième direction perpendiculaire à la première et située dans le même plan vertical, cependant que des moyens moteurs comportant un arbre de sortie rotatif sont fixés sur le bâti pour l'entraînement de l'ensemble à mouvements croisés et du dispositif de préhension, ce dispositif de transfert devant permettre un mouvement de va-et-vient extrêmement rapide grâce à une réalisation simple des moyens d'entraînement et de la cinématique de l'ensemble mobile.

Dans ce but, l'invention est caractérisée en ce que l'arbre de sortie est soumis à un mouvement rotatif oscillant et est solidaire de l'une des extrémités d'une bielle dont l'autre extrémité comporte un moyen de liaison articulée avec la partie supérieure du support, la bielle imprimant ainsi au support et au moyen de préhension un déplacement suivant une portion de cercle par les déplacements combinés perpendiculaires du support et de l'élément intermédiaire, la distance entre les axes de rotation et donc la longueur du rayon de cette portion de cercle étant réglables.

Afin de bien faire comprendre l'invention, on va décrire à titre d'exemple non limitatif, en se référant aux figures jointes en annexe, un mode de réalisation du dispositif de transfert suivant l'invention, utilisable pour le transfert de plaquettes destinées à des contacts électriques, entre un poste de stockage et une machine à souder.

La fig. 1 est une vue de face en élévation du dispositif suivant l'invention.

La fig. 2 est une vue de côté suivant A de la fig. 1, avec coupe partielle.

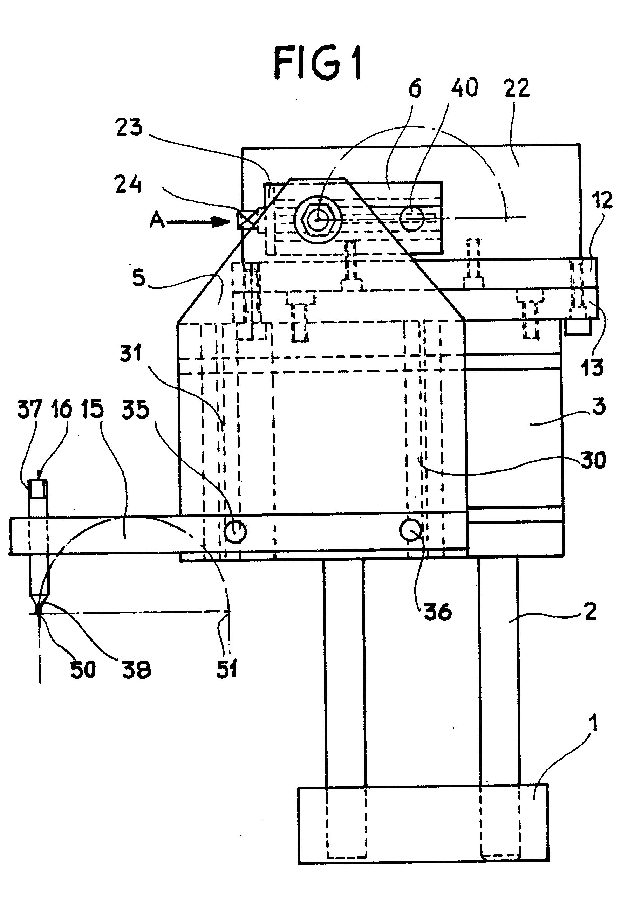

Sur la fig. 1, on voit un socle 1 sur lequel sont fixées rigidement des colonnes verticales 2 portant elles-mêmes un bloc vertical 3, l'ensemble du socle 1 des colonnes 2 et du bloc 3 constituant le bâti fixe du dispositif de transfert de petites pièces.

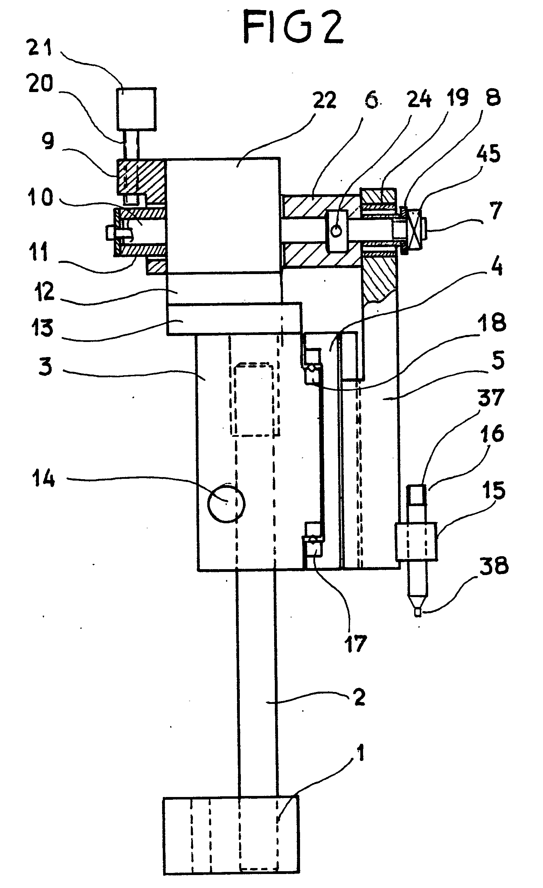

Ainsi qu'il est visible sur la fig. 2, le socle 3 est réglable en hauteur sur les colonnes 2 grâce à des tampons de fixation 14 permettant la fixation du bloc 3 à une certaine hauteur sur les colonnes 2, lorsqu'ils sont mis en place dans des ouvertures correspondantes du bloc 3.

Le bloc 3 porte sur sa face avant des glissières à billes 17 et 18 de direction horizontale disposées l'une à la partie inférieure et l'autre à la partie supérieure du bloc 3.

Ces glissières à billes 17 et 18 permettent le déplacement suivant la direction horizontale d'une table 4 portée par le bloc 3 par l'intermédiaire des glissières 17 et 18.

La table porte elle-même des glissières verticales 30 et 31 sur lesquelles vient se monter une seconde table 5 mobile suivant la direction verticale par rapport à la table 4 et mobile suivant un mouvement complexe suivant les deux directions du plan vertical de déplacement par rapport au bâti fixe.

La table 5 porte elle-même, par l'intermédiaire de pièces de fixation 35 et 36, un bras 15 constituant avec la table 5 le support du dispositif de préhension 16 constitué par une buse d'aspiration.

Les tables 4 et 5 constituent donc un ensemble de tables à mouvements croisés permettant tout type de translation du dispositif 16 dans le plan vertical de déplacement.

Le dispositif 16 est monté réglable sur le bras 15 dans la direction horizontale et dans la direction verticale pour régler la position de ce dispositif de préhension par rapport au poste de chargement et au poste de soudage des petites pièces.

Le dispositif de préhension est constitué par un tube dont la partie supérieure 37 peut être reliée à une tubulure elle-même couplée à un dispositif d'aspiration permettant la saisie des petites pièces par la partie inférieure 38 du dispositif de préhension 16 de plus faible diamètre que la partie supérieure.

L'installation d'aspiration est en fonctionnement pendant la prise des petites pièces et pendant leur transport, et l'on interrompt son fonctionnement uniquement au sommet de la dépose de la petite pièce au poste de soudage.

A la partie supérieure du bloc 3 faisant partie du bâti fixe de l'installation sont disposées deux pièces de fixation 12 et 13 fixées au bâti fixe par l'intermédiaire de vis.

Sur la pièce 12 est fixé, par l'intermédiaire de vis, le corps d'un vérin rotatif 22 commandé de façon que son arbre de sortie 40 sur la face avant du vérin solidaire d'une bielle 6 entraîne cette bielle dans un mouvement de rotation alternatif avec un angle de rotation de 180° dans un sens et dans l'autre.

La bielle 6, dont la section est visible à la fig. 2, comporte une rainure centrale en forme de T à l'intérieur de laquelle peut se déplacer un axe 7 traversé par une vis de déplacement micrométrique 24 pour le réglage fin de la position de l'axe 7 dans la rainure de la bielle 6.

La vis 24 est montée sur une plaque 23 et son vissage, ou son dévissage, permet le déplacement précis de l'axe 7 à l'intérieur de la rainure de la bielle 6 dans la direction horizontale.

De cette façon, on peut régler de manière extrêmement précise la position de l'axe 7 par rapport à la position de l'arbre de sortie 40 du vérin 22 solidaire du corps de la bielle 6.

Lorsque l'axe 7 est en place, on fixe sa position sur la bielle grâce à un écrou 45 dont la face interne vient en contact lors du serrage avec la face externe de la bague interne 8 d'un roulement 19 monté à l'intérieur de la table 5. L'écrou 45 assure ainsi la liaison entre la bielle 6 et la table 5.

Lorsque le vérin est en fonctionnement, c'est-à-dire lorsque l'arbre de sortie 40 est animé d'un mouvement de rotation alternatif de 180°, on voit que l'axe 7 est ainsi animé d'un mouvement de déplacement dans un plan vertical suivant une trajectoire constituée par un demi-cercle dont le rayon peut être réglé de façon précise grâce à la vis micrométrique 24, l'arbre 40 du vérin 22 ayant une direction horizontale perpendiculaire à la bielle.

La table 5, et donc le bras 15 et le dispositif de préhension 16, reliés à l'axe 7 par l'intermédiaire du roulement 19, sont également entraînés dans un mouvement de translation dans un plan vertical suivant une trajectoire constituée par un demi-cercle de même rayon.

Pendant ces mouvements de translation, la table 5 est en effet guidée dans un mouvement ayant des composantes horizontales et verticales grâce au montage à tables croisées 4 et 5.

L'arbre du vérin sur la face arrière de ce vérin désigné par le repère 10 est solidaire d'un levier 11 qui lui est fixé rigidement, ce levier 11 coopérant avec des vis de butée réglables 20 pour la détection des mouvements du vérin grâce à des dispositifs 21 sensibles au contact ou à la pression exercée par le levier 11 au cours du mouvement de rotation de l'arbre du vérin 22.

Les dispositifs 21 peuvent être des capteurs électriques ou pneumatiques.

L'information donnée par ces capteurs peut être traitée pour la mesure et l'enregistrement des paramètres de fonctionnement du dispositif de transfert ou pour la commande de cycle de ce dispositif de transfert.

On voit que, lorsque le dispositif de préhension 16 se déplace sous l'effet du vérin rotatif 22, sa partie inférieure 38 assurant la préhension des petites pièces se déplace en un mouvement de translation suivant un demi-cercle entre la position de prise des petites pièces 50 et la position de dépose de ces pièces 51.

On voit que l'un des avantages importants du dispositif suivant l'invention est d'effectuer le transfert des pièces suivant un parcours ne comportant pas de changements brusques de direction, avec des arrêts du moyen de préhension au-dessus de la position de prise et au-dessus de la position de dépose, alors que la tangente à la trajectoire est pratiquement verticale.

De cette façon, la force d'inertie au moment de ces arrêts est dirigée suivant la même direction que la force de retenue des pièces par aspiration. De cette façon, on ne risque pas de déplacements et de décrochements des pièces dans une position éloignée de la position de dépose.

Dans le cas où la libération de la pièce ne se fait pas exactement au moment où la pièce rentre en contact avec le poste de travail, le déplacement horizontal reste très faible pour une hauteur de quelques millimètres au-dessus du poste de travail.

Par exemple, pour une course de 70 mm et une hauteur de 2 mm, le déplacement horizontal n'est que 0,057 mm.

Un autre avantage de l'invention qui apparaît clairement dans la description qui a été faite ci-dessus est que le dispositif de transfert ne nécessite qu'un seul vérin à mouvements alternatifs et que, en conséquence, on évite une construction complexe et une commande avec synchronisation des mouvements de vérin multiples.

L'invention ne se limite pas au mode de réalisation qui vient d'être décrit; elle en comporte au contraire toutes les variantes et l'on peut modifier des points de détail sans pour autant sortir du cadre de l'invention.

C'est ainsi que l'on a décrit un dispositif comportant un vérin rotatif effectuant des mouvements de rotation d'un angle de 180° dans un sens et dans l'autre, mais qu'il est possible d'imaginer des dispositifs de transfert où le vérin se déplace dans un mouvement de rotation alternatif d'un angle quelconque, dans le cas où la prise et la dépose, par exemple, ne se font pas à la même hauteur.

On peut imaginer également un mode d'articulation de la table 5 constituant le support du moyen de préhension 16, avec le bras 15, sur la bielle différant du roulement qui a été décrit. On peut imaginer toutes formes d'articulations assurant un déplacement en rotation de la table par rapport à la bielle.

De la même façon, on a décrit des dispositifs de guidage constitués par des glissières à billes, mais on peut imaginer un montage de tables ou de supports d'un type quelconque différent de glissières à billes, par exemple des glissières lisses ou tout autre mode de guidage.

Le bâti peut également revêtir une autre forme que la forme décrite où des colonnes permettent le réglage en hauteur du dispositif de transfert par rapport au poste de prise et de dépose des pièces.

On peut également imaginer un moyen de préhension différent d'un moyen à aspiration, comme il vient d'être décrit.

Enfin, le dispositif suivant l'invention est applicable non seulement au transfert de plaquettes de contacts électriques entre un poste de stockage et un poste de soudage, mais encore chaque fois que l'on veut transporter des petites pièces avec une cadence importante entre deux endroits pour réaliser leur traitement, leur usinage ou leur conditionnement.

**Revendications**

1. Dispositif de transfert de petites pièces comportant un bâti fixe (3), un moyen de préhension (16) fixé sur un support (5) et des moyens de déplacement du moyen de préhension et de son support par rapport au bâti fixe entre une position de prise et une position de dépose des pièces avec arrêt dans ces positions et inversion du déplacement, le dispositif utilisant un ensemble d'éléments à mouvements croisés dans des directions perpendiculaires connu en soi comportant le support (5), le bâti (3) et un élément intermédiaire (4), le moyen de préhension (16) étant porté par le support (5) qui est monté mobile par rapport à l'élément (4) selon une première direction d'un plan vertical et l'élément intermédiaire (4) étant monté mobile par rapport au bâti (3) selon une deuxième direction perpendiculaire à la première et située également dans un plan vertical, cependant que des moyens moteurs (22) comportant un arbre de sortie rotatif (40) sont fixés sur le bâti (3) pour l'entraînement de l'ensemble à mouvements croisés et du moyen de préhension (16), caractérisé par le fait que l'arbre de sortie (40) est soumis à un mouvement rotatif oscillant et est solidaire de l'une des extrémités d'une bielle (6) dont l'autre extrémité comporte un moyen de liaison articulée (7) avec la partie supérieure du support (5), la bielle (6) imprimant ainsi au support et au moyen de préhension (16) un déplacement suivant une portion de cercle par les déplacements combinés perpendiculaires du support (5) et de l'élément intermédiaire (4), la distance entre les axes de rotation (40) et (7) et donc la longueur du rayon de cette portion de cercle étant réglables.

2. Dispositif de transfert de petites pièces suivant la revendication 1, caractérisé par le fait que le déplacement et le réglage de position du moyen de liaison articulée (7) entre la bielle (6) et le support (5) du moyen de préhension (16) sont réalisés par une vis micrométrique (24) en prise sur le moyen de liaison articulaire (7) qui est un axe (7) mobile à l'intérieur de la bielle (6) constituant l'axe de la liaison articulée, le blocage en position de cet axe (7) étant réalisé par un écrou (45) effectuant la liaison entre le support (5) du moyen de préhension et la bielle (6).

3. Dispositif de transfert de petites pièces suivant l'une quelconque des revendications 1 ou 2, caractérisé par le fait que la liaison articulée entre la bielle (6) et le support (5) du moyen de préhension (16) est constituée par un axe (7) fixé sur la bielle (6), d'une part, et sur la bague interne (9) d'un roulement (19) solidaire du support (5) du moyen de préhension (16), d'autre part.

4. Dispositif de transfert de petites pièces suivant l'une quelconque des revendications 1, 2 ou 3, caractérisé par le fait que le dispositif de préhension (16) est monté sur un bras horizontal (15) de façon réglable dans la direction horizontale et dans la direction verticale sur ce bras (15), lui-même solidaire du support (5) monté articulé sur la bielle (6).

## Claims

1. Apparatus for transferring small articles, comprising a fixed frame (3), a gripping means (16) fixed to a support (5), and means for displacing the gripping means and its support in relation to the fixed frame between a position for picking up and a position for putting down the articles, with a stop in these positions and with a reversal of the direction of displacement, the apparatus making use of an assembly, known per se, of elements with intersecting movements in perpendicular directions, comprising the support (5), the frame (3) and an intermediate element (4), the gripping means (16) being carried by the support (5) which is mounted so as to be movable relative to the element (4) in a first direction in a vertical plane and the intermediate element (4) being mounted so as to be movable relative to the frame (3) in a second direction perpendicular to the first and likewise in a vertical plane, whilst drive means (22) comprising a rotary output shaft (40) are fixed to the frame (3) for driving the assembly having intersecting movements and the gripping means (16), characterized in that the output shaft (40) is subjected to an oscillating rotary movement and is fixed to one of the ends of a connecting rod (6), the other end of which possesses a means of hinged connection (7) to the upper part of the support (5), the connecting rod (6) thus imparting to the support and to the gripping means (16) a displacement over a portion of a circle by means of the combined perpendicular displacement of the support (5) and the intermediate element (4), the distance between the axes of rotation (40) and (7), and therefore the length of the radius of this portion of a circle, being adjustable.

2. Apparatus for transferring small articles according to claim 1, characterized in that the displacement and adjustment of position of the means of hinged connection (7) between the connecting rod (6) and the support (5) for the gripping means (16) are carried out by a micrometer screw (24) engaged on the means of hinged connection (7) which is an axle (7) movable within the connecting rod (6) constituting the axis of the hinged connection, this axle (7) being locked in position by a nut (45) making the connection between the support (5) for the gripping means and the connecting rod (6).

3. Apparatus for transferring small articles according to either one of claims 1 or 2, characterized in that the hinged connection between the connecting rod (6) and the support (5) for the gripping means (16) consists of an axle (7) fixed to the connecting rod (6), on the one hand, and to the inner race (9) of a bearing (19) fixed to the support (5) for the gripping means (16), on the other hand.

4. Apparatus for transferring small articles according to any one of claims 1, 2 or 3, characterized in that the gripping device (16) is mounted on a horizontal arm (15) so as to be adjustable in the horizontal direction and in the vertical direction on this arm (15) which is itself fixed to the support (5) hinged on the connecting rod (6).

## Patentansprüche

1. Vorrichtung zum Transfer kleiner Gegenstände mit einem feststehenden Gestellrahmen (3), einer Greifeinrichtung (16), die auf einem Träger (5) befestigt ist und einer Einrichtung zur Verschiebung der Greifeinrichtung und ihres Trägers in bezug auf den feststehenden Gestellrahmen zwischen einer Greifstellung und einer Ablegestellung der Gegenstände mit Anhalten in diesen Stellungen und Umkehrung der Verschiebung, wobei die Vorrichtung eine Anordnung von an sich bekannten Elementen aufweist, die sich kreuzweise in senkrechten Richtungen bewegen und den Träger (5), den Gestellrahmen (3) und ein Zwischenelement (4) umfassen, wobei das Greifelement (16) vom Träger (5) getragen wird, der bewegbar in bezug auf das Element (4) in einer ersten Richtung in einer vertikalen Ebene montiert ist und das Zwischenelement (4) in bezug auf den Gestellrahmen (3) in einer zweiten Richtung bewegbar befestigt ist, die senkrecht in bezug auf die erste Richtung und ebenfalls in einer vertikalen Ebene verläuft, während Antriebseinrichtungen (22), die eine drehbare Abtreibswelle (40) umfassen, auf dem Gestellrahmen (3) zum Antrieb der Anordnung mit kreuzweisen Bewegungen und der Greifeinrichtung (16) befestigt sind, dadurch gekennzeichnet, dass die Abtreibswelle (40) einer oszillierenden Drehbewegung unterworfen und fest mit einem der Enden einer Pleuelstange (6) verbunden ist, deren anderes Ende eine Gelenkverbindung (7) mit dem oberen Abschnitt des Trägers (5) umfaßt, so daß die Pleuelstange (6) dem Träger (5) und der Greifeinrichtung (16) eine Verschiebung entlang einem Kreisabschnitt aufgrund der kombinierten lotrechten Verschiebungen des Trägers (5) und des Zwischenelementes (4) mitteilt, und dass der Abstand zwischen den Rotationsachsen (40) und (7), und daher die Länge des Radius dieses Kreisabschnittes einstellbar ist.

2. Vorrichtung zum Transfer kleiner Gegenstände nach Anspruch 1, dadurch gekennzeichnet, dass die Verschiebung und die Einstellung der Stellung der Gelenkverbindung (7) zwischen der Pleuelstange (6) und dem Träger (5) der Greifeinrichtung (16) mittels einer Mikrometer- (Feinstell-)Schraube (24) bewirkt wird, die in Eingriff mit der Gelenkverbindung (7) steht, die eine Achse (7) ist, welche innerhalb der Achse (6), welche die Achse der Gelenkverbindung darstellt, bewegbar ist, und dass die Verriegelung der Achse (7) in ihrer Stellung durch eine Schraubenmutter (45) bewirkt wird, welche die Verbindung zwischen dem Träger (5) der Greifeinrichtung und der Pleuelstange (6) herstellt.

3. Vorrichtung zum Transfer kleiner Gegenstände nach einem der beiden Ansprüche 1 oder 2, dadurch gekennzeichnet, dass die Gelenkverbindung zwischen der Pleuelstange (6) und dem Träger (5) der Greifeinrichtung (16) aus einer Achse (7) besteht, die einerseits auf der Pleuelstange (6) und anderseits am Innenring (9) eines Kugellagers (19) des Trägers (5) der Greifeinrichtung (16) befestigt ist.

4. Vorrichtung zum Transfer kleiner Gegenstände nach einem der Ansprüche 1 bis 3, dadurch gekennzeichnet, dass die Greifeinrichtung (16) auf einem horizontalen Arm (15) einstellbar in horizontaler Richtung und in vertikaler Richtung auf dem Arm (15) montiert ist, der selbst fest mit dem Träger (5) verbunden ist, welcher an der Pleuelstange (6) angelenkt ist.

# FIG 1

# FIG 2